# DEMANDE DE BREVET EUROPEEN

(11) **EP 2 101 132 A1**
(43) Date de publication de la demande: **16.09.2009**
(21) Numéro de dépôt: 09154717.4
(22) Date de dépôt: 10.03.2009
(51) Int. Cl.: F27B 9/12, F27B 9/30

(54) **Four tunnel**

(30) Priorité: 10.03.2008 FR 0801295
(71) Demandeur: Imerys TC, 69760 Limonest (FR)
(72) Inventeur: Monot, Didier, 01480 ARS SUR FORMANS (FR)
(74) Mandataire: Maureau, Philippe

(57) **Abrégé**

L'invention concerne un four tunnel (1) comportant une chambre de cuisson (2) comprenant successivement une zone d'entrée (3) de produits (4) à cuire, une zone de préchauffage (5) des produits, une zone de cuisson (6) équipée d'une source de chaleur formée par exemple par une pluralité de brûleurs, une zone de refroidissement (7) et une zone de sortie (8) des produits, le four tunnel (1) comportant en outre des moyens de transport conçus pour transporter les produits à cuire (4) de la zone d'entrée (3) à la zone de sortie (8) de la chambre de cuisson (2), ainsi que des moyens de ventilation de la chambre de cuisson (2) générant un flux d'air à contre-courant du sens de déplacement des produits. La chambre de cuisson (2) est équipée d'au moins un canal de dérivation (13), disposé au niveau de la zone de cuisson (6), apte à dériver hors de la zone de cuisson (6) au moins une partie de l'air et/ou des fumées circulant dans la chambre de cuisson (2).

## Description

L'invention concerne un four tunnel, notamment pour réaliser la cuisson de produits à base d'argile.

Un four tunnel classique est notamment connu des documents US 4 990 086 et FR 2 862 130. Celui comporte une chambre de cuisson comprenant successivement, dans le sens de sa longueur, une zone d'entrée de produits à cuire, une zone de préchauffage des produits, une zone de cuisson équipée d'une source de chaleur formée par exemple par une pluralité de brûleurs, une zone de refroidissement et une zone de sortie des produits, le four tunnel comportant en outre des moyens de transport conçus pour transporter les produits à cuire de la zone d'entrée à la zone de sortie de la chambre ainsi que des moyens de ventilation de la chambre de cuisson.

De manière classique, le flux d'air généré par les moyens de ventilation est à contre-courant par rapport au déplacement des produits dans la chambre de cuisson.

L'air frais circule donc généralement depuis la zone de sortie vers la zone d'entrée des produits. L'air est alors successivement chauffé dans la zone de refroidissement des produits, au contact des produits chauds issu de la zone de cuisson, dite également zone de feu, puis surchauffé par les brûleurs dans la zone de cuisson. L'air est ensuite progressivement refroidi dans la zone de préchauffage des produits, au contact de ces derniers.

Les produits suivent quant à eux une évolution inverse de leur température puisque ceux-ci sont préchauffés dans la zone de préchauffage au contact de l'air chaud issu de la zone de cuisson, et sont refroidis dans la zone de refroidissement, au contact de l'air frais.

Les fours tunnel de ce type présentent les inconvénients exposés ci-après.

Comme indiqué précédemment, l'air est surchauffé dans la zone de cuisson. Une telle surchauffe n'est pas nécessaire pour assurer une bonne cuisson des produits et est coûteuse en énergie puisque les brûleurs, destinés à la cuisson des produits, servent également à surchauffer l'air. Ceci tend à diminuer le rendement du four.

L'invention vise à remédier à ces inconvénients en proposant un four tunnel présentant un rendement plus élevé.

A cet effet, l'invention concerne un four tunnel comportant une chambre de cuisson comprenant successivement une zone d'entrée de produits à cuire, une zone de préchauffage des produits, une zone de cuisson équipée d'une source de chaleur formée par exemple par une pluralité de brûleurs, une zone de refroidissement et une zone de sortie des produits, le four tunnel comportant en outre des moyens de transport conçus pour transporter les produits à cuire de la zone d'entrée à la zone de sortie de la chambre de cuisson, ainsi que des moyens de ventilation de la chambre de cuisson générant un flux d'air à contre-courant du sens de déplacement des produits, caractérisé en ce que la chambre de cuisson est équipée d'au moins un canal de dérivation, disposé au niveau de la zone de cuisson, apte à dériver hors de la zone de cuisson au moins une partie de l'air et/ou des fumées circulant dans la chambre de cuisson.

De cette manière, l'air circulant dans le canal de dérivation passe de la zone de refroidissement des produits à la zone de chauffage de ceux-ci, sans passer par la zone de cuisson. Ainsi, l'air circulant dans le canal de dérivation n'est pas surchauffé par la source de chaleur. Le rendement du four est donc amélioré.

Avantageusement, le canal de dérivation comporte une entrée située directement en amont de la zone de cuisson et une sortie située directement en aval de la zone de cuisson, dans le sens de circulation de l'air et/ou des fumées.

L'entrée du canal de dérivation est ainsi disposée en aval de la zone de refroidissement, la sortie du canal de dérivation étant disposée en amont de la zone de préchauffage.

Selon une forme de réalisation, l'entrée et la sortie du canal de dérivation comportent chacune une pluralité d'ouvertures permettant le passage de l'air et/ou des fumées.

Selon une caractéristique de l'invention, le canal de dérivation est délimité par une première et une seconde cloisons verticales réalisées en matériau réfractaire.

Préférentiellement, le canal de dérivation est délimité par un panneau de voûte supérieur et par un fond inférieur réalisés en matériau réfractaire.

Selon une possibilité de l'invention, la première cloison verticale, disposée du côté de la chambre de cuisson, est reliée au panneau de voûte par l'intermédiaire d'un pont en fibres céramiques.

Avantageusement, l'entrée et la sortie du canal de dérivation comportent chacune une pluralité d'ouvertures permettant le passage de l'air et/ou des fumées.

Selon une forme de réalisation de l'invention, la chambre de cuisson présente une première et une seconde parois latérales, un canal de dérivation étant ménagé dans chacune des parois latérales de la chambre de cuisson.

Selon une caractéristique de l'invention, les moyens de transport comportent au moins un chariot mobile comprenant un châssis sur lequel est monté un support, destiné à supporter les produits à cuire, isolé du châssis par l'intermédiaire d'au moins un élément en matériau réfractaire.

De toute façon l'invention sera bien comprise à l'aide de la description qui suit en référence au dessin schématique annexé représentant, à titre d'exemple non limitatif, une forme de réalisation de ce four tunnel.
Figure 1 en est une vue schématique partielle, de dessus et en coupe longitudinale ;
Figure 2 est un diagramme représentant la température de l'air circulant dans la chambre de cuisson, en fonction de la position illustrée à la figure 1 ;
Figure 3 en est une vue schématique partielle, en coupe transversale selon la ligne III-III de la figure 1 ;
Figure 4 en est une vue schématique partielle, en coupe transversale selon la ligne IV-IV de la figure 1.

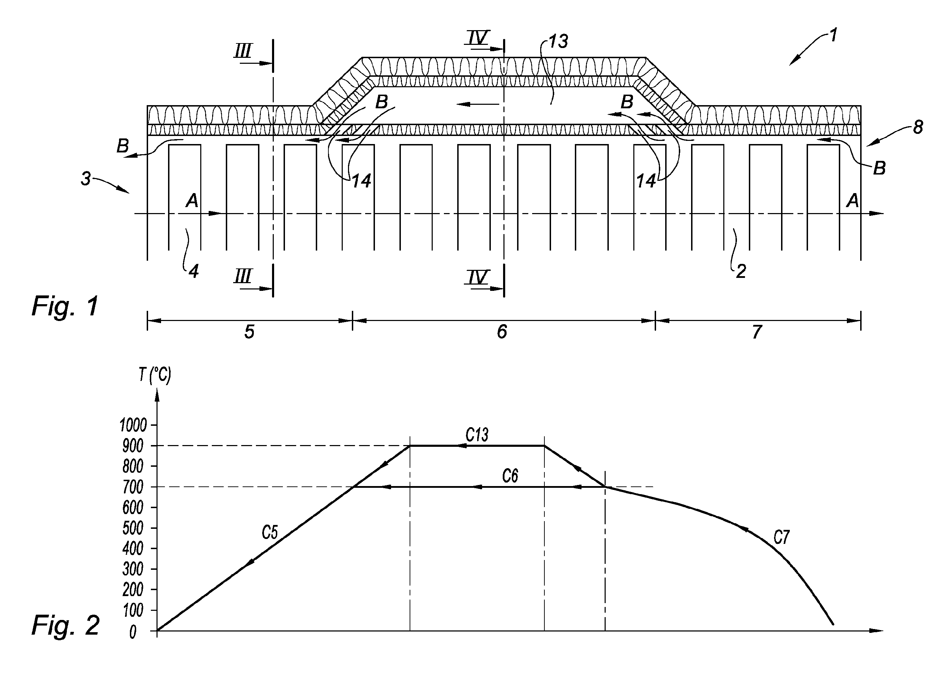

La figure 1 représente un four tunnel 1 selon l'invention.

Celui-ci comporte une chambre de cuisson 2 comprenant successivement une zone d'entrée 3 de produits 4 à cuire, une zone de préchauffage 5 des produits, une zone de cuisson 6, équipée d'une pluralité de brûleurs (non représentés), une zone de refroidissement 7 des produits et une zone de sortie 8 de ceux-ci.

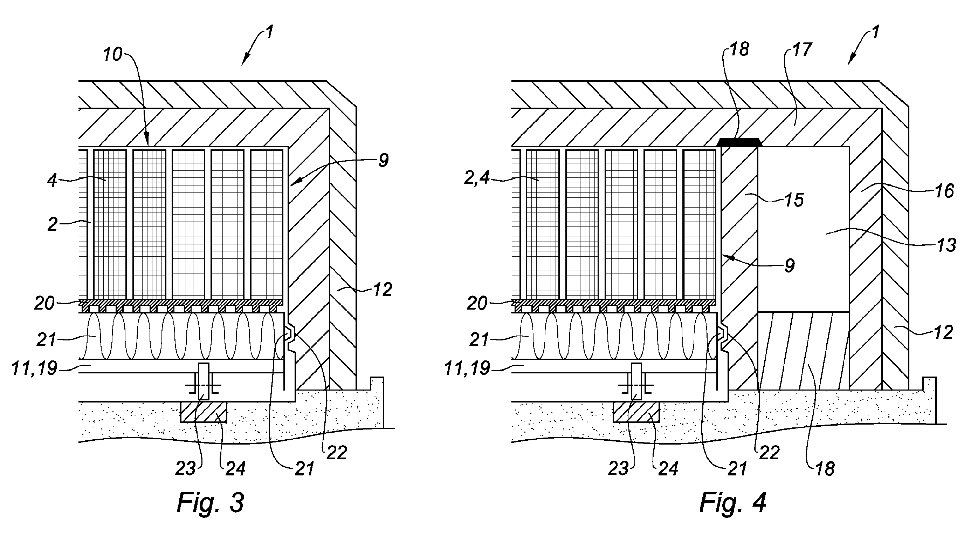

Les brûleurs sont disposés au niveau des parois latérales 9 de la chambre de cuisson 2 et/ou au niveau de la paroi supérieure 10, dite paroi de voûte (voir figure 3).

Le four tunnel 1 comporte en outre une pluralités de chariots mobiles 11 positionnés en file et conçus pour transporter les produits à cuire 4 de la zone d'entrée 3 à la zone de sortie de la chambre 8, comme cela est représenté par la flèche A.

Il est à noter que les produits 4 empilés sur les chariots 11 occupent la quasi-totalité de la section transversale de la chambre de cuisson 2.

Le four comporte également au moins un ventilateur (non représenté) agencé de manière à créer un flux d'air dirigé dans le sens contraire du sens de circulation A des produits 4, comme cela est représenté par les flèches B.

Les parois de la chambre de cuisson 2 sont formées par des briques en matériau réfractaire, doublés par des cloisons ou parois 12 en matériau réfractaire et/ou isolant, comme cela est connu en soi.

La chambre de cuisson 2 est équipée en outre, au niveau de la zone de cuisson, d'un canal de dérivation 13 ménagé dans chaque paroi latérale 9. Chaque canal de dérivation 13 est apte à dériver, hors de la zone de cuisson 6, au moins une partie de l'air et/ou des fumées circulant dans la chambre de cuisson 2.

Seul un canal de dérivation 13 est représenté à la figure 1. Cette figure est en effet une vue en coupe partielle du four tunnel, représentant une seule moitié de ce four. Toutefois, la structure du four tunnel étant sensiblement symétrique par rapport au plan médian longitudinal, celui-ci comprend bien deux canaux de dérivation 13 assurant chacun la même fonction.

Chaque canal de dérivation 13 comporte une entrée située en amont de la zone de cuisson 6 et une sortie située en aval de la zone de cuisson 6 dans le sens de circulation de l'air. L'entrée et la sortie du canal de dérivation 13 comportent chacune une pluralité d'ouvertures 14 permettant le passage de l'air et/ou des fumées.

Comme cela est mieux visible à la figure 4, chaque canal de dérivation 13 est délimité par une première et une seconde cloisons verticales 15, 16 réalisées en matériau réfractaire et/ou isolant, ainsi que par un panneau de voûte supérieur 17 et par un fond inférieur 18 réalisés en matériau réfractaire et/ou isolant.

La première cloison verticale 15, disposée du côté de la chambre de cuisson 2, est reliée au panneau de voûte 17 par l'intermédiaire d'un pont en fibres céramiques 18.

De plus, les chariots 11 comprennent chacun un châssis 19 sur lequel est monté un support 20, destiné à supporter les produits à cuire 4, isolé du châssis par l'intermédiaire d'au moins un élément en matériau réfractaire 21.

Les chariots 11 comportent en outre des nervures latérales de guidage 21 coopérant avec des rainures 22 de formes complémentaires, ménagées dans les parois latérales 9 de la chambre de cuisson.

Les chariots 11 sont équipés de roues 23 prenant appui sur des rails ou, plus généralement, des chemins de roulement 24 possédant des caractéristiques mécaniques accrues.

Le fonctionnement de l'invention va maintenant être décrit plus en détail en référence aux figures 1 et 2.

Comme vu précédemment, lors du fonctionnement du four tunnel 1, les produits 4 circulent selon la sens de la flèche A et l'air circule en sens contraire, comme illustré par les flèches B.

Plus précisément, l'air traverse la zone de refroidissement 7 des produits 4 en échangeant de la chaleur avec ces derniers de manière à être chauffé progressivement. L'augmentation de la température de l'air dans cette zone est représentée par la portion C7 de la courbe. L'air est ainsi chauffé jusqu'à une température de l'ordre de 700 °C.

Une partie de l'air traverse ensuite les ouvertures 14 et entre dans chaque canal de dérivation 13 pour ressortir par les ouvertures 14, en aval de la zone de cuisson 6 dans le sens de circulation de l'air.

Une autre partie traverse la zone de cuisson 6 et est surchauffée par les brûleurs.

La proportion entre la partie dérivée de la zone de cuisson 6 à l'aide des canaux de dérivation 13 et la partie traversant cette zone 6 peut être ajustée en fonction des besoins, et est notamment dépendant de la perte de charge du canal de dérivation 13.

Il est à noter que, pour assurer le bon fonctionnement du four, la perte de charge engendrée par le canal de dérivation 13 doit être plus faible que celle nécessaire pour traverser les produits 4 ou l'interstice entre les produits 4 et la paroi de la chambre de cuisson 2.

En ce qui concerne la partie de l'air traversant la zone de combustion, l'air est chauffé jusqu'à une température de 900 °C, comme cela est illustré par la zone C6 de la courbe.

Au contraire, la partie de l'air traversant le canal de dérivation ne dépasse pas 700 °C, comme cela est illustré par la zone C13 de la courbe.

Ensuite, l'air issu de la zone de cuisson 6 ou du canal de dérivation correspondant 13 échange de la chaleur avec les produits froids entrants 4. L'air est ainsi est progressivement refroidi, comme cela est illustré par la zone C5 de la courbe.

De cette manière, il est possible d'éviter de surchauffer une partie substantielle de l'air circulant dans la chambre de cuisson 2, ce qui permet de diminuer l'apport énergétique nécessaire à la cuisson des produits dans une mesure allant de 0 à 11 %.

Comme il va de soi, l'invention ne se limite pas aux seules formes d'exécution de ce dispositif, décrites ci-dessus à titre d'exemple, mais elle embrasse au contraire toutes les variantes.

## Revendications

1. Four tunnel (1) comportant une chambre de cuisson (2) comprenant successivement une zone d'entrée (3) de produits (4) à cuire, une zone de préchauffage (5) des produits, une zone de cuisson (6) équipée d'une source de chaleur formée par exemple par une pluralité de brûleurs, une zone de refroidissement (7) et une zone de sortie (8) des produits, le four tunnel (1) comportant en outre des moyens de transport (11) conçus pour transporter les produits à cuire (4) de la zone d'entrée (3) à la zone de sortie (8) de la chambre de cuisson (2), ainsi que des moyens de ventilation de la chambre de cuisson (2) générant un flux d'air à contre-courant du sens de déplacement des produits, **caractérisé en ce que** la chambre de cuisson (2) est équipée d'au moins un canal de dérivation (13), disposé au niveau de la zone de cuisson (6), apte à dériver hors de la zone de cuisson (6) au moins une partie de l'air et/ou des fumées circulant dans la chambre de cuisson (2).

2. Four tunnel (1) selon la revendication 1, **caractérisé en ce que** le canal de dérivation (13) comporte une entrée située en amont de la zone de cuisson (6) et une sortie située en aval de la zone de cuisson (6) dans le sens de circulation de l'air et/ou des fumées.

3. Four tunnel (1) selon la revendication 2, **caractérisé en ce que** l'entrée et la sortie du canal de dérivation (13) comportent chacune une pluralité d'ouvertures (14) permettant le passage de l'air et/ou des fumées.

4. Four tunnel (1) selon l'une des revendications 1 à 3, **caractérisé en ce que** le canal de dérivation (13) est délimité par une première et une seconde cloisons verticales (15, 16) réalisées en matériau réfractaire.

5. Four tunnel (1) selon l'une des revendications 1 à 4, **caractérisé en ce que** le canal de dérivation (13) est délimité par un panneau de voûte supérieur (17) et par un fond inférieur (18) réalisés en matériau réfractaire.

6. Four tunnel (1) selon les revendications 4 et 5, **caractérisé en ce que** la première cloison verticale (15), disposée du côté de la chambre de cuisson (2), est reliée au panneau de voûte (17) par l'intermédiaire d'un pont en fibres céramiques (18).

7. Four tunnel (1) selon l'une des revendications 1 à 6, **caractérisé en ce que** la chambre de cuisson (2) présente une première et une seconde parois latérales (9), un canal de dérivation (13) étant ménagé dans chacune des parois latérales (9) de la chambre de cuisson (2).

8. Four tunnel (1) selon l'une des revendications 1 à 7, **caractérisé en ce que** les moyens de transport comportent au moins un chariot mobile (11) comprenant un châssis (19) sur lequel est monté un support (20), destiné à supporter les produits à cuire (4), isolé du châssis par l'intermédiaire d'au moins un élément en matériau réfractaire (21).
